# EUROPEAN PATENT SPECIFICATION

(11) **EP 3 231 735 B1**
(45) Date of publication and mention of the grant of the patent: **30.10.2019**
(21) Application number: 15844858.9
(22) Date of filing: 24.09.2015
(51) Int. Cl.: B65F 1/00, B65F 1/14, B02C 18/00, B02C 18/24, B02C 19/00, B30B 9/32, B03B 9/06

(54) **EQUIPMENT FOR THE SEPARATION AND TREATMENT OF HOUSEHOLD WASTE**
AUSRÜSTUNG ZUR TRENNUNG UND BEHANDLUNG VON HAUSMÜLL
INSTALLATION POUR SÉPARATION ET TRAITEMENT DE DÉCHETS DOMESTIQUES

(30) Priority: 26.09.2014 ES 201431412
(43) Date of publication of application: 18.10.2017
(73) Proprietor: Diseño y Construcción de Maquinaria Automatizada, S.L., 46360 Buñol (Valencia) (ES)
(72) Inventor: TOBÍAS GRANADO, José Antonio, E-46360 BUÑOL (Valencia) (ES)
(74) Representative: Pons Ariño, Angel
(86) International application number: PCT/ES2015/070699
(87) International publication number: WO 2016/046445

(56) References cited:
- WO-A1-2013/128351
- WO-A1-2013/140002
- ES-A1- 2 455 916
- ES-T3- 2 133 704
- FR-A1- 2 694 273
- FR-A1- 2 698 024
- GB-A- 2 407 282

## Description

### OBJECT OF THE INVENTION

As expressed in this specification, the present invention relates to equipment for the separation and treatment of household waste, such as organic waste, metal and plastic packaging, paper/cardboard and glass.

The aim of the invention is to separately reduce the volume of the waste stored in the home, eliminate odors and facilitate the separation, all of this leading to fewer waste management issues as a final result.

Thus, with the system of the invention, the waste volume is reduced, eliminating odors and bacteria, which will affect optimization of the capacity of waste containers currently in cities, thus being able to reduce the number of collections; all this entailing important cost savings for the government.

With the system of the invention, the separation of waste is facilitated, thus generating a greater amount of raw material for treatment plants and making it possible to manage a greater amount of waste, thus increasing turnover.

### BACKGROUND OF THE INVENTION

Currently, household waste containers are known, some of which have several compartments to separate the distinct types of waste.

Equipment for the separation and treatment of household waste is also known, which generally comprises a supporting frame that supports different modules according to the distinct types of waste, such as glass packaging, paper/cardboard, plastic and metal packaging, and also organic waste. These modules comprise devices for treating different waste, reducing its volume to later be collected in independent containers.

An example of a system for recycling domestic waste is known from GB2407282. This known system comprises a primary recycling unit comprising a single housing with apertures each for receiving respective different types of waste for recycling; processing chambers, associated with respective aperture, which receive and process waste into recycled material; recycled material storage spaces that receive product from processing chamber; and processing tools in processing chambers. Each tool processes a type of waste associated with the respective aperture and processing chambers. The tools are driven simultaneously by a single motor.

### DESCRIPTION OF THE INVENTION

The equipment for the separation and treatment of household waste which constitutes the object of the invention is defined in the appended claims. The said equipment comprises a surrounding frame wherein a first module is fixed for glass waste, a second module for plastic and metal waste, a third module for paper/cardboard waste, and a fourth module for organic waste. The different modules respectively comprise devices for reducing the volume of the waste, such that once the volume of the waste has been reduced, the waste is deposited by gravity into bags in independent containers arranged in the lower part of the surrounding casing, below the devices.

It comprises a first device to grind up the glass containers which comprises a grinding rotor provided with radial arms that have end teeth that strike glass receptacles, such that the ground up glass material falls by gravity into a bag in a first container.

It comprises a second device for reducing the volume of the plastic and metal packaging which comprises a drag rotor in combination with a toothed rotor, both rotors being arranged in parallel and rotating in the same direction; the toothed rotor having teeth ending in a sharp edge, while the drag rotor has radial vanes that drag the plastic and metal packaging towards the toothed rotor in an initial phase; a second container with its collection bag for plastic and metal packaging being arranged under the second device.

It comprises a third device for grinding up the paper/cardboard material that comprises two opposing rotors with parallel axes that rotate in opposite directions and which are arranged on the same horizontal plane; wherein the paper/cardboard material, upon being deposited on both opposing rotors, is swallowed up by a succession of toothed wheels incorporated on the opposing rotors, such that the ground up material falls below the two opposing rotors until they reach a bag in a third container.

It comprises a fourth drying device for the organic material that comprises an air circuit driven by a fan and heated by means of an electrical resistor disposed in said air circuit, through which moisture is extracted from the organic material in order to expel it into the atmosphere through a filter to eliminate unpleasant odors.

Said drying device is closed and has an inlet mouth through which hot air enters and an outlet mouth through which a mixture of air and moisture that reaches the electrical resistor exits in order to extract the moisture through said filter.

Between the inlet mouth and the outlet mouth there is a chamber wherein the organic material is located when it is dried, such that said chamber is disposed in the air circuit.

It comprises a fifth device to grind up the organic material after it is dried which comprises two groups of grinding disks attached to two parallel shafts; wherein the grinding disks are fit between pairs of fixed plates arranged on parallel planes and which are attached to pairs of bars with their ends embedded in two fixed frameworks, to which two parallel shafts that rotate in opposite directions are also coupled; a fifth container with the collection bag for the organic material being arranged under the grinding disks.

The equipment of the invention further incorporates intake tunnels through which the household waste is introduced, wherein said intake tunnels constitute household waste conduits to the different devices for reducing the volume of said waste.

The movement of the first, second, third and fifth devices is transmitted by means of a single electric motor, the rotation of which simultaneously transmits the movement to said devices, which will be described later.

The first module for the glass waste comprises a first intake tunnel that has an initial descending section towards the inside of the tunnel, a second widened intermediate section and a final section that opens into a first container with the collection bag; wherein the grinding rotor is inside the widened intermediate section.

The second device for plastic and metal packaging is arranged on an intermediate section of a second intake tunnel that also has an initial section with a mouth through which the packaging is introduced and a final section that opens into the second container with the collection bag; wherein the initial section of the second tunnel is arranged horizontally, while the final section is arranged vertically, the second device being arranged where both the initial and final sections of the tunnel meet.

Below the drag rotor of the second device is a bridge platform to support the plastic and metal packaging, wherein one end of said bridge platform is near the teeth of the toothed rotor, defining a narrow passage between said end of the bridge platform and the teeth of the toothed rotor through which the packaging passes when they are dragged by the combined rotational movements of the toothed rotor and the drag rotor.

The second device is complemented with the bridge platform and a conveyor belt, or any other dragging or pushing system, that drags or pushes the plastic and metal packaging to said second device; wherein the bridge platform is arranged between the conveyor belt and the toothed rotor.

The toothed rotor and the drag rotor of the second device are located above the bridge platform; wherein the drag rotor is higher than the toothed rotor with respect to the bridge platform.

When considering the third device for paper/cardboard material, the toothed wheels of one of the opposing rotors are offset with respect to the toothed wheels of the other corresponding opposing rotor; such that between the adjacent toothed wheels of an opposing rotor there are intermediate spaces facing the toothed wheels of the other corresponding rotor and vice versa, wherein the toothed wheels of an opposing rotor fit into the intermediate spaces of the other corresponding opposing rotor.

To prevent the paper/cardboard material from sticking to the opposing rotors, the equipment of the invention further comprises two combs, each one comprising a framework and tines that have end sections fitted into the intermediate spaces delimited between the adjacent toothed wheels of each of the opposing rotors of the third device, wherein those end sections have sharp edges that are in contact with the far side of the intermediate spaces of the opposing rotors; those end sections also being in contact with lateral faces of the toothed wheels.

The electric motor transmits its movement to an initial shaft, one of the ends of which transmits its rotational movement directly to the grinding rotor of the first device for glass, while the opposite end of the initial shaft transmits its rotational movement to the second device for the plastic and metal packaging by means of a toothed wheel and gearwheel transmission mechanism.

The movement of the third grinding device of paper/cardboard is transmitted by means of a belt coupled to pulleys embedded in the ends of the two rotors of the second device for the plastic and metal packaging; and another pulley embedded in one end of one of the two rotors of the third device, wherein these two opposing rotors are linked by means of lateral gearwheels that engage with each other.

The drag rotor of the second device has an embedded front gearwheel, while the toothed wheel of this second device has an embedded rear gearwheel, these two gearwheels being attached to a chain that is also coupled to a central gearwheel embedded in one end of a transverse axis, wherein the movement between both rotors is transmitted by means of said chain.

In another embodiment, the movement is transmitted by means of two toothed wheels that engage with each other; a front toothed wheel embedded in the drag rotor and a toothed wheel recessed in the toothed rotor.

The movement transmission system of the different elements that process the different types of waste, respectively in each housing intended for that purpose, is operated by means of a single electric motor and a single initial shaft of the movement transmission, which implies a greater likelihood that the installation is as compact as possible, as well as the practically non-existent maintenance thereof, and greatly reduced energy consumption, so that the equipment of the invention can be classified as an energy efficient household appliance, according to current legislation.

Furthermore, it is worth noting that the equipment of the invention solves another widespread problem of storing waste during a relatively extended period of time (more than 8 to 12 hours in our kitchens/galleries), which implies a subsequent increase in the odors that can emanate from the bin or receptacle where it is collected. The present invention can solve this problem. For this reason, it has the previously described drying device for organic material. It also includes a washing device by means of water showers that can include a cleaning product.

The equipment of the invention further comprises a heat-sealing device for closing and sealing the mouth of a plastic bag into which the organic material is dumped, said plastic bag being housed in each collection container for the processed waste.

Said heat-sealing device comprises two mobile supports that move in opposite directions, which are coupled to threaded sections (one with left-hand threads and the other with right-hand threads) of a rotational screw that rotates in both directions by means of a motor element; facing heated profiles being fixed to the mobile supports by means of which the mouth of the plastic bag is sealed with heat.

The equipment of the invention comprises a self-cleaning device that comprises a series of conduits that open into cleaning nozzles that clean each of the modules by means of water combined with a scented bar of soap housed in a compartment; wherein the activation of the cleaning device causes the water circulation to come in contact with the scented bar of soap.

For the purpose of helping to make this specification more readily understandable, a set of drawings constituting an integral part of the same has been included below, wherein by way of illustration and not limitation the object of the invention has been represented.

### BRIEF DESCRIPTION OF THE DRAWINGS

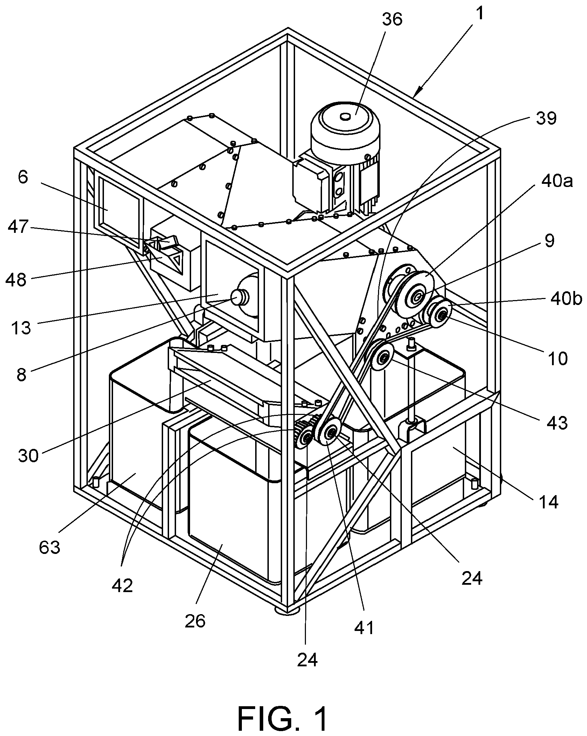

**Figure 1****.-** Shows a perspective view of the equipment for the separation and treatment of household waste, object of the invention. It comprises a first module for glass waste, a second module for plastic and metal waste, a third module for paper/cardboard waste, and a fourth module for organic waste. The modules comprise devices for reducing the volume of the waste.

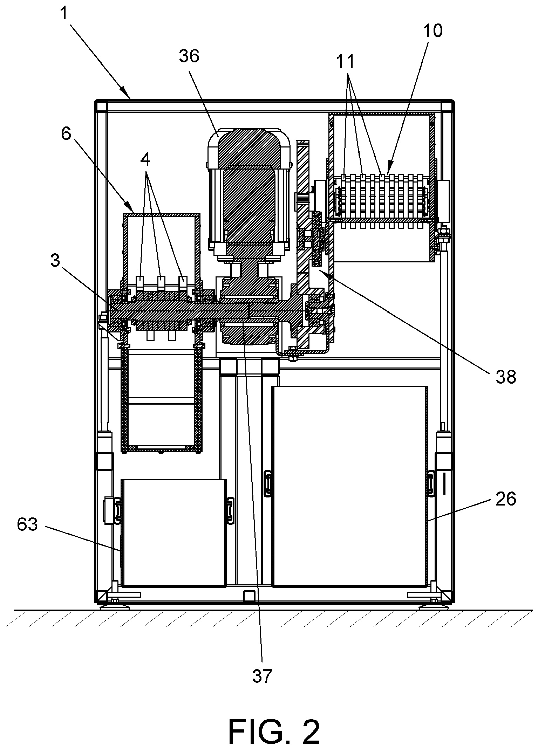

**Figure 2****.-** Shows a cross-sectional elevation view of the equipment, wherein it essentially shows the first module and the second module. It is also shows a single electric motor for transmitting the movement to all devices.

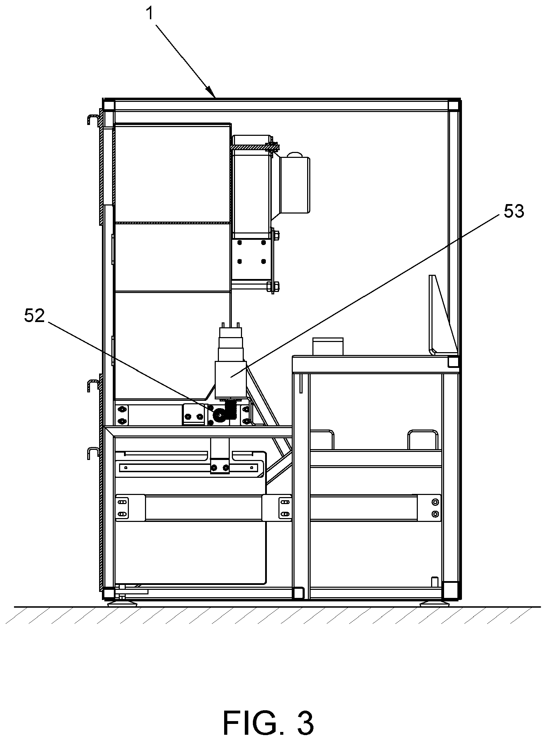

**Figure 3****.-** Shows a profile view of the equipment of the invention.

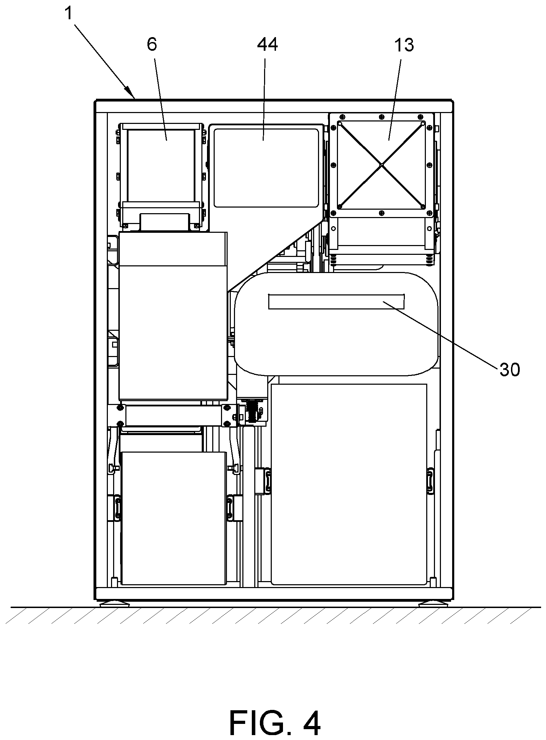

**Figure 4****.-** Shows an elevation view of the equipment of the invention.

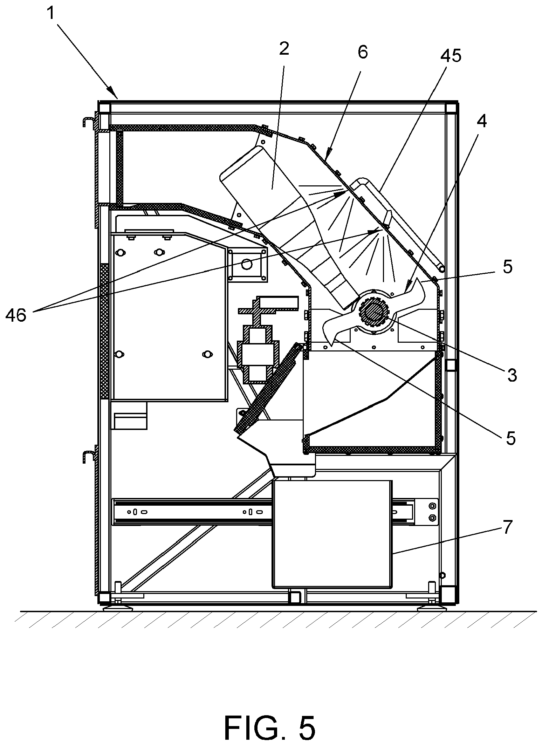

**Figure 5****.-** Shows a cross-sectional profile view of the equipment of the invention, wherein it shows a first grinding device and reducing the volume of the glass material.

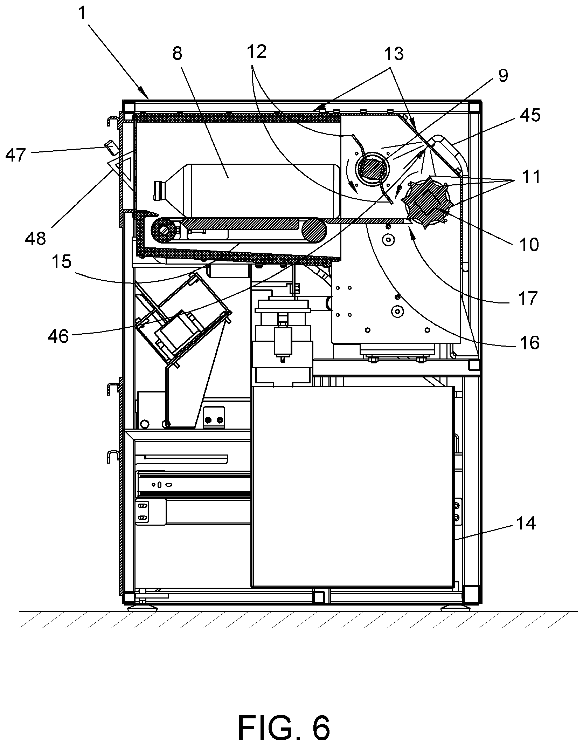

**Figure 6****.-** Shows another cross-sectional profile view of the equipment of the invention, wherein it shows a second device for reducing the volume of the plastic and metal waste.
**Figure 7a****.-** Shows an elevation view of the second device for reducing the volume of the plastic and metal waste, wherein the movement is transmitted by means of a first mechanism that comprises several gearwheels in combination with a chain.
**Figure 7b****.-** Shows an elevation view similar to the preceding one, wherein the transmission is carried out by means of a second mechanism formed by two toothed wheels.

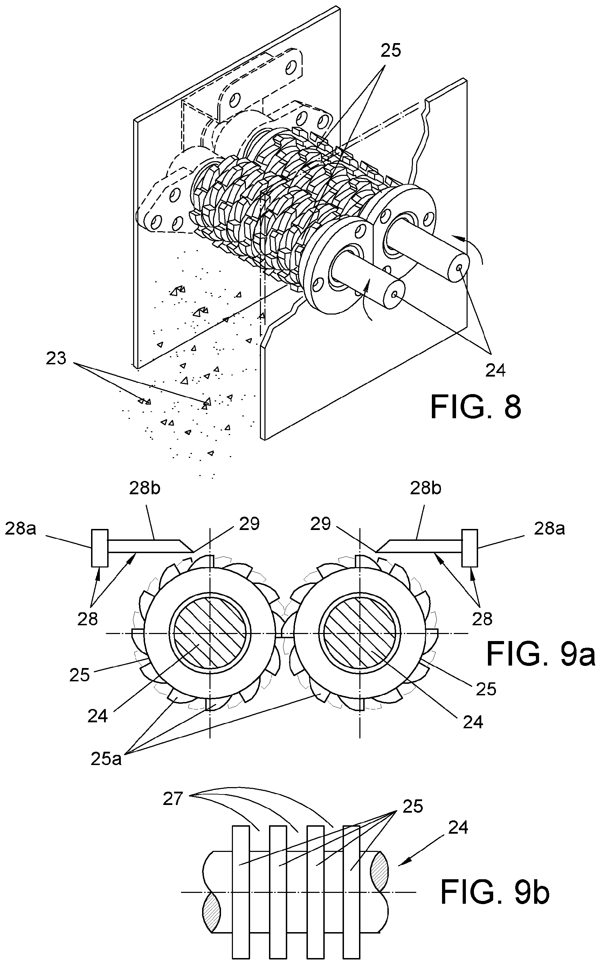

**Figure 8****.-** Shows a perspective view of a third device for reducing the volume of the paper/cardboard material.
**Figure 9a****.-** Shows a front view of that shown in the preceding figure.
**Figure 9b****.-** Shows an elevation view of an opposing rotor that forms part of the third device.

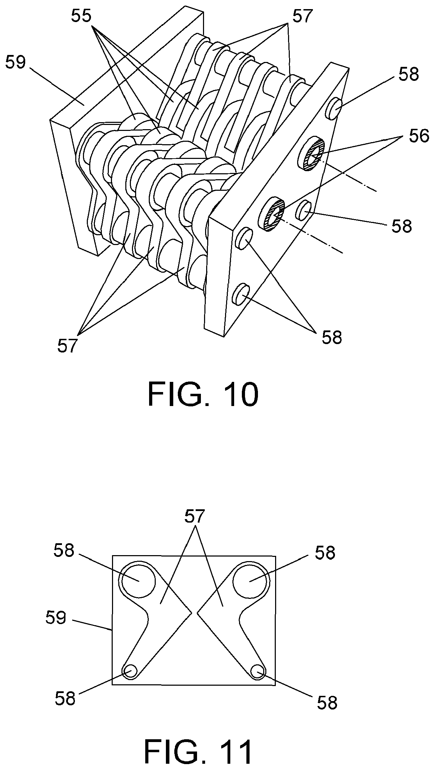

**Figure 10****-** Shows a perspective view of a fourth grinding device and reducing the volume of the organic waste.
**Figure 11****.-** Shows a front view of that shown in the preceding figure.
**Figure 12****.-** Shows a schematic view of the fourth module for organic waste, wherein a drying device for extracting moisture from that organic waste is shown.

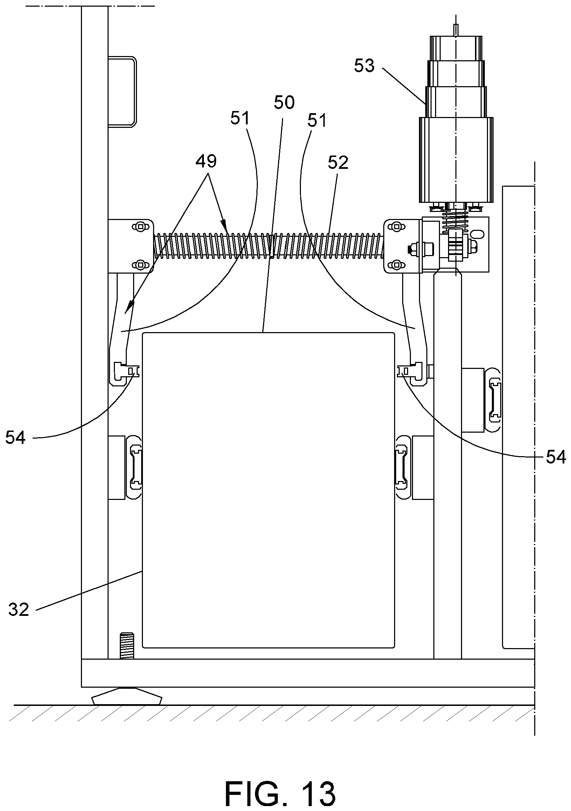

Figure 13.- Shows a front view of a part of the equipment of the invention, wherein it essentially shows a collection container for the organic waste, in which a plastic bag is housed, which, once filled, has its mouth closed and sealed by means of a heat-sealing device also shown in this figure 13.

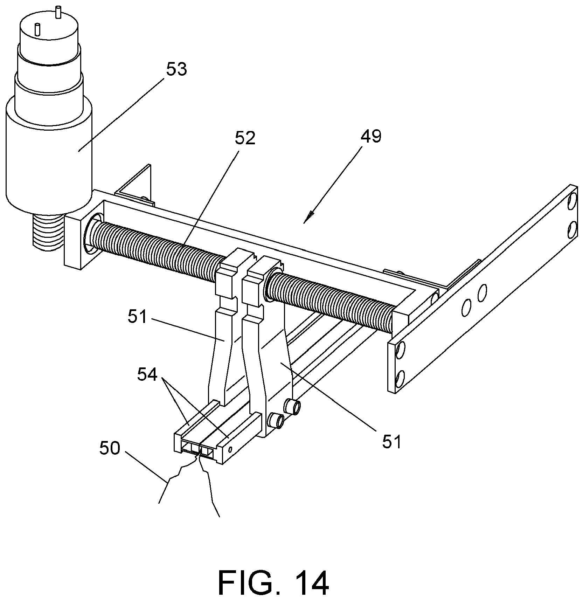

**Figure 14****.-** Shows a perspective view of the heat-sealing device referred to in the preceding figure.

### DESCRIPTION OF AN EXEMPLARY EMBODIMENT OF THE INVENTION

Considering the numbering adopted in the figures, the equipment for the separation and treatment of household waste comprises a surrounding frame (1) wherein four modules are fixed: a first module for glass waste, a second module for plastic and metal waste, a third module for paper/cardboard waste, and a fourth module to treat organic waste.

The modules respectively comprise devices for reducing the volume of the waste, such that once the volume of the waste has been reduced, the waste is deposited by gravity in bags, located in independent containers arranged in the lower part of the surrounding casing (1), below the devices, which operate by means of a single electric motor (36).

The volume of the containers of glass material is reduced by means of a first device comprising a grinding rotor (3) provided with radial arms (4) that have end teeth (5) that strike glass packaging (2) that is previously introduced through a mouth of a first tunnel (6), inside of which is the grinding rotor (3).

This first tunnel (6) has an initial descending section towards the inside of the tunnel, a second widened intermediate section and a final section that opens into a first container (7). Inside the widened intermediate section is the grinding rotor (3), the rotation of which breaks and grinds up the glass material, converting it into smaller fragments that are later collected by gravity in the bag located in the first container (7).

The volume of the packaging of plastic and metal material (8) is reduced by means of a second device comprising a drag rotor (9) combined with a toothed rotor (10), both being arranged in parallel and rotating in the same direction. Said toothed rotor (10) has teeth (11) ending in a sharp edge.

The drag rotor (9) has radial vanes (12) that drag the plastic and metal packaging (8) towards the toothed rotor (10) in an initial phase.

This second device is arranged on an intermediate section of a second tunnel (13) that also has an initial section with a mouth through which the packaging is introduced and a final section that opens into the second container (14) in order to collect the packaging with a volume reduced by the second device.

The initial section of the second tunnel (13) is arranged horizontally, while the final section is arranged vertically, the second device being arranged where both the initial and final sections of the second tunnel meet.

The second device is complemented with a conveyor belt (15) that drags the packaging (8) to the second device, such that between the conveyor belt (15) and the toothed rotor (10) there is a bridge platform (16), one of the ends of which is near the teeth (11) of the toothed rotor (10), defining a narrow passage (17) between said end of the bridge platform (16) and the teeth (11) of the toothed rotor (10) through which the packaging (8) is required to pass, reducing their volume when dragged by the combined rotational movements of the toothed rotor (10) and the drag rotor (9), such that after moving through said narrow passage (17) the packaging (8) falls by gravity into the second container (14).

Both rotors (9), (10) of the second device are located above the bridge platform (16), such that the drag rotor (9) is higher than the toothed rotor (10) with respect to the bridge platform (16).

On the other hand, during the forward movement of a piece of plastic/metal packaging (8) driven by the conveyor belt (15), when said packaging (8) reaches the bridge platform (16), it is first dragged and initially deformed by the drag rotor (9) until it reaches the toothed rotor (10). In this situation, the combined rotational movements of both rotors (9), (10) drag the packaging (8), forcing it to pass through the narrow passage (17), reducing its volume by deformation, the packaging (8) finally falling into the second container (14).

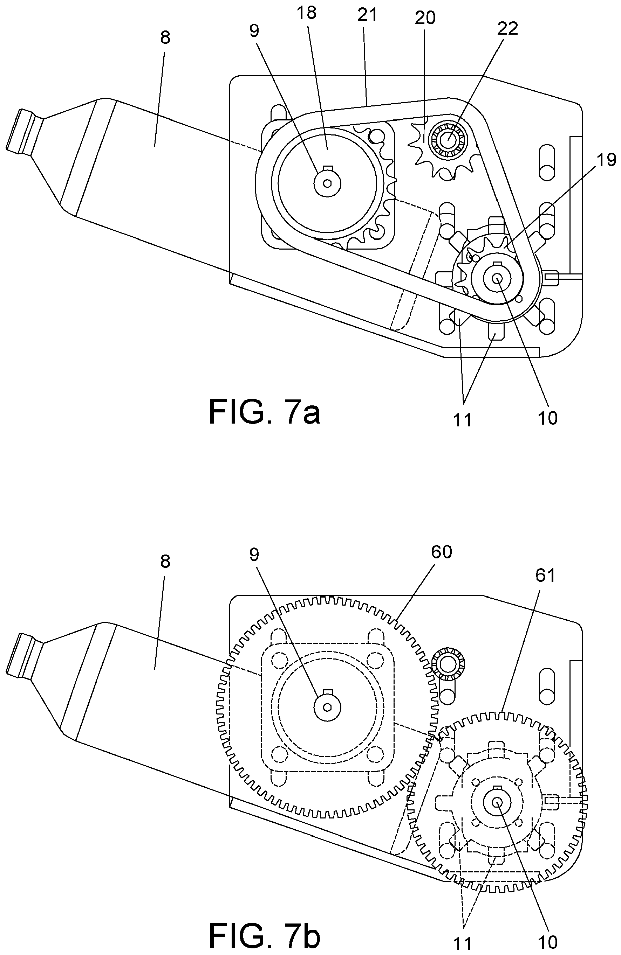

As shown in figure 7a, the drag rotor (9) of the second device has an embedded front gearwheel (18), while the toothed wheel (10) of this second device has an embedded rear gearwheel (19), these two gearwheels being attached to a chain (21) that is also coupled to a central gearwheel (20) embedded in one end of a transverse axis (22), wherein the movement between both rotors (9), (10) is transmitted by means of said chain (21).

In another embodiment as shown in figure 7b, the movement between the drag rotor (9) and the toothed rotor (10) is transmitted by means of a front toothed wheel (60) embedded in the drag rotor (9), and a rear toothed wheel (61) embedded in the toothed rotor (10), foregoing in this case the chain (21).

The paper/cardboard material (23) is ground up, reducing its volume by means of a third device comprising two opposing rotors (24) with parallel axes that rotate in opposite directions and which are arranged on the same horizontal plane; wherein the paper/cardboard material (23), upon being deposited on both opposing rotors (24), is swallowed up by a succession of toothed wheels (25) incorporated on the opposing rotors (24), such that the ground up material falls below the two opposing rotors (24) until it reaches a bag in a third container (26).

The opposing rotors (24) incorporate the succession of toothed wheels (25) that comprise cutting teeth (25a) such that the toothed wheels (25) of an opposing rotor (24) are offset with respect to the toothed wheels (25) of the other corresponding opposing rotor (24). Between the adjacent toothed wheels (25) of an opposing rotor (24) there are intermediate spaces (27) facing the toothed wheels (25) of the other corresponding rotor (24) and vice versa, wherein the toothed wheels (25) of an opposing rotor (24) fit into the intermediate spaces (27) of the other corresponding opposing rotor (24).

To prevent the paper/cardboard material (23) from sticking to the opposing rotors (24), two combs (28) have been provided, each one comprising a framework (28a) and tines (28b) that comprise end sections fitted into the intermediate spaces (27) delimited between the adjacent toothed wheels (25), wherein those end sections have sharp edges (29) that are in contact with the far side of the intermediate spaces (27) of the opposing rotors (24).

The paper/cardboard material (23) is introduced through a mouth of a third flattened tunnel (30) that opens above the two opposing rotors (24).

The organic material (31) is first dried by means of a fourth drying device, reducing its volume in a first phase; and then it is ground up by means of a fifth grinding device to reduce the volume of the organic material in a second phase.

Thus, the fourth drying device for extracting moisture from the organic material also reduces its volume as well as the unpleasant odors generated.

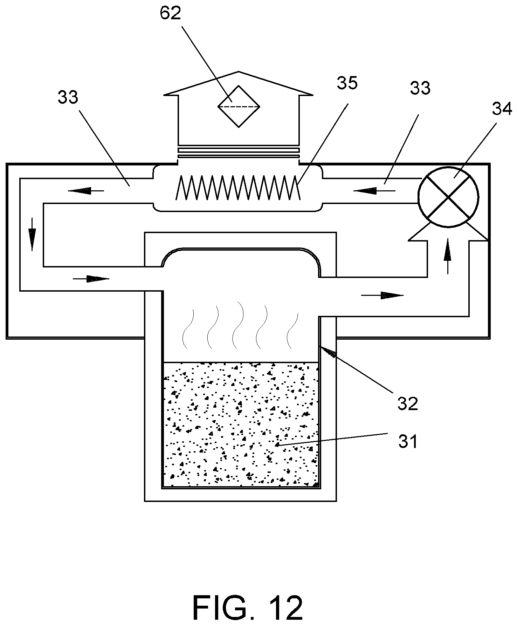

As shown in figure 12, said drying device comprises an air circuit (33) driven by a fan (34) and heated by means of an electrical resistor (35) disposed in said air circuit (33), through which moisture is extracted from the organic material in order to expel it into the atmosphere through a filter (62) to eliminate unpleasant odors, such that in order to extract the moisture from the organic material, it is housed in a chamber (32) inserted in the air circuit (33).

To be able to extract the moisture, the fourth drying device is closed, it has an inlet mouth (32a) through which hot air enters and an outlet mouth (32b) through which a mixture of air and moisture that reaches the electrical resistor (35) that oversees extracting the moisture, expelling it into the atmosphere, such that between the inlet mouth (32a) and the outlet mouth (32b) the chamber (32) is located wherein the organic material is housed when it is dried.

The fifth grinding device comprises two groups of grinding disks (55) under which a fifth container (63) is arranged with a bag for collecting said ground up organic material (31) that is initially introduced through a fifth tunnel (44) that guides said organic material to the group of grinding disks (55).

The two groups of grinding disks (55) are attached to two parallel shafts (56) such that each group of grinding disks (55) fit between pairs of fixed plates (57) arranged on parallel planes and which are attached to pairs of bars (58) with their ends embedded in two fixed frameworks (59), to which two parallel shafts (56) that rotate in opposite directions are also coupled by means of the electric motor (36) in combination with an intermediate transmission.

The electric motor (36) transmits its movement to an initial shaft (37), one of the ends of which transmits its rotational movement directly to the first grinding device for glass, while the opposite end of the initial shaft (37) transmits its rotational movement to the second device for the plastic and metal packaging (8) by means of a toothed wheel and gearwheel transmission mechanism (38).

The movement of the third grinding device of paper/cardboard (23) is transmitted by means of a belt (39) coupled to pulleys (40a), (40b) embedded in the ends of the two rotors (9), (10) of the second device for the plastic and metal packaging (8); and another pulley (41) embedded in one end of one of the two opposing rotors (24) of the third device, wherein these two opposing rotors (24) are linked by means of lateral gearwheels (42) that engage with each other.

Said belt (39) is also linked to a tensing pulley (43) to be able to adjust its tension.

The equipment of the invention has a self-cleaning device that functions automatically after operating for a number of pre-set hours, starting up automatically. It comprises a series of conduits (45) that open into cleaning nozzles (46) that clean each of the modules. Said cleaning device uses a scented bar of soap (47) that is introduced into a compartment (48) designed for this purpose. Upon activation of the cleaning system, the scented bar of soap (47) comes in contact with water and is diluted in order to clean all modules of the equipment of the invention.

The equipment also has a heat-sealing device (49) for closing and sealing the mouths of plastic bags (50) housed in the fourth container (32) for organic material (31), such that when they are full, they are automatically sealed. Thus, when the user removes the organic material or waste, they remove a full plastic bag (50) that is clean, hermetically sealed and free of odors and other dirt.

The heat-sealing device (49) comprises two mobile supports (51) that move in opposite directions, which are coupled to threaded sections (one with left-hand threads and the other with right-hand threads) of a rotational screw (52) that rotates in both directions by means of a motor element (53). The mobile supports (51) in turn support facing profiles (54) to seal the mouth of the plastic bag (50), such that once the bag is full, the mobile supports (51) along with the facing profiles (54) approach each other, dragging them to the mouth of the plastic bag (50), such that this progressive approach is possible due to the rotation of the rotational screw (52) in one direction until the facing profiles (54) butt against each other, catching the mouth of the plastic bag (50) which is heat-sealed due to the heat transmitted by the facing profiles (54).

Once the plastic bag (50) is sealed, the rotational screw (52) is rotated in the direction opposite to that described in the preceding paragraph, placing the mobile supports (51) along with the facing profiles (54) in positions far from each other.

## Claims

1. Equipment for the separation and treatment of household waste comprising a surrounding frame wherein a first module is fixed for glass waste, a second module for plastic and metal waste, a third module for paper/cardboard waste, and a fourth module for organic waste, wherein the different modules respectively comprise devices for reducing the volume of the waste, such that once the volume of the waste has been reduced, the waste is deposited by gravity into bags in independent containers arranged in the lower part of the surrounding casing, below the devices, wherein the equipment further comprises:
- a first device for grinding up the glass containers (2), wherein the ground up glass material falls by gravity into a first collection container (7);
- a second device for reducing the volume of plastic and metal packaging (8) under which a second collection container (14) for plastic and metal packaging (8) is arranged;
- a third device for grinding up the paper/cardboard material (23) comprising two opposing rotors (24), wherein the ground up material falls below the two opposing rotors (24) until they reach a bag in a third collection container (26);
- a fourth drying device for extracting moisture from the organic material (31);
- a fifth device for grinding up the organic material (31) after it is dried which comprises two groups of grinding disks (55); a fifth collection container (63) for the organic material being arranged under the grinding disks (55);
- intake tunnels through which the household waste is introduced, wherein said intake tunnels constitute household waste conduits to the different devices for reducing the volume of said waste; wherein the movement of the first, second, third and fifth devices is transmitted by means of a single electric motor (36), the rotation of which simultaneously transmits the movement to said devices.

2. The equipment for the separation and treatment of household waste according to claim 1, **characterized in that** the first device for grinding up glass packaging (2) comprises a grinding rotor (3) provided with radial arms (4) that have end teeth (5) that strike the glass receptacles (2).

3. The equipment for the separation and treatment of household waste according to any one of the preceding claims, **characterized in that** the second device for reducing the volume of the plastic and metal packaging (8) comprises a drag rotor (9) with a toothed rotor (10), both rotors being arranged in parallel and rotating in the same direction; the toothed rotor (9) having teeth (11) ending in a sharp edge, while the drag rotor (9) has radial vanes (12) that drag the plastic and metal packaging (8) towards the toothed rotor (10) in an initial phase.

4. The equipment for the separation and treatment of household waste according to any one of the preceding claims, **characterized in that** the third device for grinding up paper/cardboard material (23) comprises two opposing rotors (24) with parallel axes that rotate in opposite directions and which are arranged on the same horizontal plane; wherein the paper/cardboard material (23), upon being deposited on both opposing rotors (24), is swallowed up by a succession of toothed wheels (25) incorporated on the opposing rotors (24).

5. The equipment for the separation and treatment of household waste according to any one of the preceding claims, **characterized in that** the two groups of grinding disks (55) are attached to two parallel shafts (56); wherein the two groups of grinding disks (55) fit between pairs of fixed plates (57) arranged on parallel planes and which are attached to pairs of bars (58) with their ends embedded in two fixed frameworks (59), to which two parallel shafts (56) that rotate in opposite directions are also coupled.

6. The equipment for the separation and treatment of household waste according to any one of the preceding claims, **characterized in that**:
- the fourth drying device comprises an air circuit (33) driven by a fan (34) and heated by means of an electrical resistor (35) disposed in said air circuit (33), through which moisture is extracted from the organic material (31) in order to expel it into the atmosphere through a filter (62) to eliminate unpleasant odors; wherein the organic material (31) is housed in a chamber (32) inserted in the air circuit (33).
- the fourth drying device is closed and has an inlet mouth (32a) through which hot air enters and an outlet mouth (32b) through which a mixture of air and moisture that reaches the electrical resistor (35); wherein between the inlet mouth (32a) and the outlet mouth (32b) the chamber (32) is located, wherein the organic material (31) is housed when it is dried.

7. The equipment for the separation and treatment of household waste according to any one of the preceding claims, **characterized in that** the first module for the glass waste comprises a first intake tunnel (6) that has an initial descending section towards the inside of the tunnel, a second widened intermediate section and a final section that opens into a first container (7); wherein the first grinding device is inside the widened intermediate section.

8. The equipment for the separation and treatment of household waste according to any one of the preceding claims, **characterized in that** the second device for plastic and metal packaging (8) is arranged on an intermediate section of a second intake tunnel (13) that also has an initial section with a mouth through which the packaging (8) is introduced and a final section that opens into the second container (14); wherein the initial section of the second tunnel (13) is arranged horizontally, while the final section is arranged vertically, the second device being arranged where both the initial and final sections of the tunnel meet.

9. The equipment for the separation and treatment of household waste according to claim 3, **characterized in that** the below the drag rotor (9) of the second device is a bridge platform (16) to support the plastic and metal packaging (8), wherein one end of said bridge platform (16) is near the teeth (11) of the toothed rotor (10), defining a narrow passage (17) between said end of the bridge platform (16) and the teeth (11) of the toothed rotor (12) through which the packaging (8) passes when they are dragged by the combined rotational movements of the toothed rotor (10) and the drag rotor (9).

10. The equipment for the separation and treatment of household waste according to claim 9, **characterized in that** the second device is complemented by the bridge platform (16) and a conveyor belt (15) that drags the plastic and metal packaging (8) to said second device; wherein the bridge platform (16) is arranged between the conveyor belt (15) and the toothed rotor (10).

11. The equipment for the separation and treatment of household waste according to any one of the preceding claims 9 or 10, **characterized in that** the toothed rotor (10) and the drag rotor (9) of the second device are located above the bridge platform (16); wherein the drag rotor (9) is higher than the toothed rotor (10) with respect to the bridge platform (16).

12. The equipment for the separation and treatment of household waste according to claim 4, **characterized in that**:
- in the third device for paper/cardboard material (23), the toothed wheels (25) of one of the opposing rotors (24) are offset with respect to the toothed wheels (25) of the other corresponding opposing rotor (24);
- between the adjacent toothed wheels (25) of an opposing rotor (24) there are intermediate spaces (27) facing the toothed wheels (25) of the other corresponding rotor (24) and vice versa, wherein the toothed wheels (25) of an opposing rotor (24) fit into the intermediate spaces (27) of the other corresponding opposing rotor (24).

13. The equipment for the separation and treatment of household waste according claim 12, **characterized in that** it comprises two combs (28), each one comprising a framework (28a) and tines (28b) that have end sections fitted into the intermediate spaces (27) delimited between the adjacent toothed wheels (25) of each of the opposing rotors (24) of the third device, wherein those end sections have sharp edges (29) that are in contact with the far side of the intermediate spaces (27) of the opposing rotors (25); those end sections also being in contact with lateral faces of the toothed wheels (25).

14. The equipment for the separation and treatment of household waste according to the preceding claims 2, 3 and 4, **characterized in that**:
- the electric motor (36) transmits its movement to an initial shaft (37), one of the ends of which transmits its rotational movement directly to the grinding rotor (3) of the first device for glass, while the opposite end of the initial shaft (37) transmits its rotational movement to the second device for the plastic and metal packaging (8) by means of a toothed wheel and gearwheel transmission mechanism (38).
- the movement of the third grinding device of paper/cardboard (23) is transmitted by means of a belt (39) coupled to pulleys (40a), (40b) embedded in the ends of the two rotors (9), (10) of the second device for the plastic and metal packaging (8), and another pulley (41) embedded in one end of one of the two opposing rotors (24) of the third device, wherein these two opposing rotors (24) are linked by means of lateral gearwheels (42) that engage with each other.

15. The equipment for the separation and treatment of household waste according to claim 14, **characterized in that** the drag rotor (9) of the second device has an embedded front gearwheel (18), while the toothed wheel (10) of this second device has an embedded rear gearwheel (19), these two gearwheels being attached to a chain (21) that is also coupled to a central gearwheel (20) embedded in one end of a transverse axis (22), wherein the movement between both opposing rotors (24) is transmitted by means of said chain (21).

16. The equipment for the separation and treatment of household waste according to claim 14, **characterized in that** the transmission of movement between the drag rotor (9) and the toothed rotor (10) comprises a front toothed wheel (60) embedded in the drag rotor (9), and a rear toothed wheel (61) embedded in the toothed rotor (10), foregoing in this case the chain (21).

17. The equipment for the separation and treatment of household waste according to any one of the preceding claims, **characterized in that**:
- it comprises a heat-sealing device (49) for closing and sealing the mouth of a plastic bag (50) housed in the fifth container (63);
- the heat-sealing device (49) comprises two mobile supports (51) that move in opposite directions, which are coupled to threaded sections (one with left-hand threads and the other with right-hand threads) of a rotational screw (52) that rotate in both directions by means of a motor element (53); facing heated profiles (54) being fixed to the mobile supports (51) by means of which the mouth of the plastic bag (50) is sealed with heat.

18. The equipment for the separation and treatment of household waste according to any one of the preceding claims, **characterized in that** it comprises a self-cleaning device that comprises a series of conduits (45) that open into cleaning nozzles (46) that clean each of the modules by means of water combined with a scented bar of soap (47) housed in a compartment (48); wherein the activation of the cleaning device causes the water circulation to come in contact with the scented bar of soap (47).

## Patentansprüche

1. Ausrüstung zur Trennung und Behandlung von Hausmüll, umfassend einen umlaufenden Rahmen, in dem ein erstes Modul für Glasmüll befestigt ist, ein zweites Modul für Plastik- und Metallmüll, ein drittes Modul für Papier-/Kartonmüll und ein viertes Modul für Biomüll, wobei die unterschiedlichen Module jeweils Vorrichtungen zum Reduzieren des Müllvolumens umfassen, sodass, sobald das Müllvolumen verringert wurde, der Müll per Schwerkraft in Beuteln in unabhängigen Behältern abgelegt wird, die in dem unteren Teil des umlaufenden Gehäuses unterhalb der Vorrichtungen angeordnet sind, wobei die Ausrüstung ferner umfasst:
- eine erste Vorrichtung zum Zermahlen der Glasbehälter (2), wobei das zermahlene Glasmaterial per Schwerkraft in einen ersten Sammelbehälter (7) fällt;
- eine zweite Vorrichtung zum Verringern des Volumens von Plastik- und Metallverpackungen (8), unter der ein zweiter Sammelbehälter (14) für Plastik- und Metallverpackungen (8) angeordnet ist;
- eine dritte Vorrichtung zum Zermahlen des Papier-/Kartonmaterials (23), umfassend zwei gegenüberliegende Rotoren (24), wobei das zermahlene Material unter die zwei gegenüberliegenden Rotoren (24) fällt, bis sie einen Beutel in einem dritten Sammelbehälter (26) erreichen;
- eine vierte Trocknungsvorrichtung zum Extrahieren von Feuchtigkeit aus dem organischen Material (31);
- eine fünfte Vorrichtung zum Zermahlen des organischen Materials (31) nach dem Trocknen, die zwei Gruppen von Mahlscheiben (55) umfasst; einen fünften Sammelbehälter (63) für das organische Material, der unter den Mahlscheiben (55) angeordnet ist;
- Ansaugtunnel, durch die der Hausmüll eingeführt wird, wobei die Ansaugtunnel Hausmüllkanäle zu den unterschiedlichen Vorrichtungen zum Verringern des Müllvolumens bilden;
wobei die Bewegung der ersten, zweiten, dritten und fünften Vorrichtung mittels eines einzelnen Elektromotors (36) übertragen wird, dessen Drehung gleichzeitig die Bewegung auf die Vorrichtungen überträgt.

2. Ausrüstung zur Trennung und Behandlung von Hausmüll nach Anspruch 1, **dadurch gekennzeichnet, dass** die erste Vorrichtung zum Zermahlen von Glasverpackungen (2) einen Mahlrotor (3) umfasst, der mit radialen Armen (4) bereitgestellt ist, die Endzähne (5) aufweisen, die auf die Glasbehältnisse (2) schlagen.

3. Ausrüstung zur Trennung und Behandlung von Hausmüll nach einem der vorhergehenden Ansprüche, **dadurch gekennzeichnet, dass** die zweite Vorrichtung zum Verringern des Volumens der Plastik- und Metallverpackungen (8) einen Schlepprotor (9) mit einem Zahnrotor (10) umfasst, wobei beide Rotoren parallel angeordnet sind und sich in die gleiche Richtung drehen; wobei der Zahnrotor (9) Zähne (11) aufweist, die in einer scharfen Kante enden, während der Schlepprotor (9) radiale Schaufeln (12) aufweist, welche die Kunststoff- und Metallverpackung (8) in einer Anfangsphase in Richtung des Zahnrotors (10) ziehen.

4. Ausrüstung zur Trennung und Behandlung von Hausmüll nach einem der vorhergehenden Ansprüche, **dadurch gekennzeichnet, dass** die dritte Vorrichtung zum Zermahlen von Papier-/Kartonmaterial (23) zwei gegenüberliegende Rotoren (24) mit parallelen Achsen umfasst, die sich in entgegengesetzte Richtungen drehen und die in der gleichen horizontalen Ebene angeordnet sind; wobei das Papier-/Kartonmaterial (23) nach Anordnen auf beiden gegenüberliegenden Rotoren (24) von einer Abfolge von Zahnrädern (25) geschluckt wird, die in den gegenüberliegenden Rotoren (24) integriert sind.

5. Ausrüstung zur Trennung und Behandlung von Hausmüll nach einem der vorhergehenden Ansprüche, **dadurch gekennzeichnet, dass** die zwei Gruppen von Mahlscheiben (55) an zwei parallelen Wellen (56) angebracht sind; wobei die zwei Gruppen von Mahlscheiben (55) zwischen in parallelen Ebenen angeordneten Paaren von festen Platten (57) passen, die an Paaren von Stangen (58) angebracht sind, deren Enden in zwei feste Rahmen (59) eingebettet sind, an denen zwei parallele Wellen (56), die sich in entgegengesetzte Richtungen drehen, ebenfalls gekoppelt sind.

6. Ausrüstung zur Trennung und Behandlung von Hausmüll nach einem der vorhergehenden Ansprüche, **dadurch gekennzeichnet, dass**:
- die vierte Trocknungsvorrichtung einen Luftkreislauf (33) umfasst, der durch ein Gebläse (34) angetrieben und mittels eines in dem Luftkreislauf (33) angeordneten elektrischen Widerstands (35) erwärmt wird, wodurch dem organischen Material (31) Feuchtigkeit entzogen wird, um diese durch einen Filter (62) in die Atmosphäre auszustoßen, um unangenehme Gerüche zu beseitigen; wobei das organische Material (31) in einer Kammer (32) untergebracht ist, die in den Luftkreislauf (33) eingeführt ist;
- die vierte Trocknungsvorrichtung geschlossen ist und eine Einlassöffnung (32a) aufweist, durch die heiße Luft eintritt, und eine Auslassöffnung (32b), durch die ein Gemisch aus Luft und Feuchtigkeit austritt, die den elektrischen Widerstand (35) erreichen; wobei sich zwischen der Einlassöffnung (32a) und der Auslassöffnung (32b) die Kammer (32) befindet, in der das organische Material (31) untergebracht ist, wenn es getrocknet wird.

7. Ausrüstung zur Trennung und Behandlung von Hausmüll nach einem der vorhergehenden Ansprüche, **dadurch gekennzeichnet, dass** das erste Modul für den Glasmüll einen ersten Ansaugtunnel (6) umfasst, der einen anfänglichen abfallenden Abschnitt zum Inneren des Tunnels hin, einen zweiten aufgeweiteten Zwischenabschnitt und einen Endabschnitt, der in einen ersten Behälter (7) öffnet, aufweist; wobei die erste Mahlvorrichtung innerhalb des aufgeweiteten Zwischenabschnitts angeordnet ist.

8. Ausrüstung zur Trennung und Behandlung von Hausmüll nach einem der vorhergehenden Ansprüche, **dadurch gekennzeichnet, dass** die zweite Vorrichtung für Plastik- und Metallverpackungen (8) an einem Zwischenabschnitt eines zweiten Ansaugtunnels (13) angeordnet ist, der ebenfalls einen Anfangsabschnitt mit einer Öffnung aufweist, durch welche die Verpackung (8) eingeführt wird, und einen Endabschnitt, der in den zweiten Behälter (14) öffnet; wobei der Anfangsabschnitt des zweiten Tunnels (13) horizontal angeordnet ist, während der Endabschnitt vertikal angeordnet ist, wobei die zweite Vorrichtung dort angeordnet ist, wo sich der Anfangs- und Endabschnitt des Tunnels treffen.

9. Ausrüstung zur Trennung und Behandlung von Hausmüll nach Anspruch 3, **dadurch gekennzeichnet, dass** unterhalb des Schlepprotors (9) der zweiten Vorrichtung eine Brückenplattform (16) zum Abstützen der Plastik- und Metallverpackung (8) angeordnet ist, wobei sich ein Ende der Brückenplattform (16) in der Nähe der Zähne (11) des Zahnrotors (10) befindet und einen schmalen Durchgang (17) zwischen dem Ende der Brückenplattform (16) und den Zähnen (11) des Zahnrotors (12) definiert, durch den die Verpackung (8) läuft, wenn sie durch die kombinierten Drehbewegungen des Zahnrotors (10) und des Schlepprotors (9) gezogen wird.

10. Ausrüstung zur Trennung und Behandlung von Hausmüll nach Anspruch 9, **dadurch gekennzeichnet, dass** die zweite Vorrichtung durch die Brückenplattform (16) und ein Förderband (15) ergänzt ist, das die Plastik- und Metallverpackung (8) zur zweiten Vorrichtung zieht; wobei die Brückenplattform (16) zwischen dem Förderband (15) und dem Zahnrotor (10) angeordnet ist.

11. Ausrüstung zur Trennung und Behandlung von Hausmüll nach einem der vorhergehenden Ansprüche 9 oder 10, **dadurch gekennzeichnet, dass** der Zahnrotor (10) und der Schlepprotor (9) der zweiten Vorrichtung oberhalb der Brückenplattform (16) befindlich sind; wobei der Schlepprotor (9) höher als der Zahnrotor (10) in Bezug auf die Brückenplattform (16) ist.

12. Ausrüstung zur Trennung und Behandlung von Hausmüll nach Anspruch 4, **dadurch gekennzeichnet, dass**:
- bei der dritten Vorrichtung für Papier-/Kartonmaterial (23) die Zahnräder (25) eines der gegenüberliegenden Rotoren (24) in Bezug auf die Zahnräder (25) des anderen entsprechenden gegenüberliegenden Rotors (24) versetzt sind;
- zwischen den benachbarten Zahnrädern (25) eines gegenüberliegenden Rotors (24) Zwischenräume (27) vorhanden sind, die den Zahnrädern (25) des anderen entsprechenden Rotors (24) zugewandt sind und umgekehrt, wobei die Zahnräder (25) eines gegenüberliegenden Rotors (24) in die Zwischenräume (27) des anderen entsprechenden gegenüberliegenden Rotors (24) passen.

13. Ausrüstung zur Trennung und Behandlung von Hausmüll nach Anspruch 12, **dadurch gekennzeichnet, dass** sie zwei Kämme (28) umfasst, die jeweils einen Rahmen (28a) und Zinken (28b) umfassen, die Endabschnitte aufweisen, die in die Zwischenräume (27) eingepasst sind, die zwischen den benachbarten Zahnrädern (25) jedes der gegenüberliegenden Rotoren (24) der dritten Vorrichtung begrenzt sind, wobei diese Endabschnitte scharfe Kanten (29) aufweisen, die mit der entfernt gelegenen Seite der Zwischenräume (27) der gegenüberliegenden Rotoren (25) in Kontakt stehen; wobei diese Endabschnitte auch mit den lateralen Flächen der Zahnräder (25) in Kontakt stehen.

14. Ausrüstung zur Trennung und Behandlung von Hausmüll nach einem der vorherigen Ansprüche 2, 3 und 4, **dadurch gekennzeichnet, dass**:
- der Elektromotor (36) seine Bewegung auf eine Anfangswelle (37) überträgt, deren eines Ende seine Drehbewegung direkt auf den Mahlrotor (3) der ersten Vorrichtung für Glas überträgt, während das gegenüberliegende Ende der Anfangswelle (37) seine Drehbewegung mittels eines Zahnrad- und Zahnradgetriebemechanismus (38) auf die zweite Vorrichtung für die Plastik- und Metallverpackung (8) überträgt;
- die Bewegung der dritten Mahlvorrichtung für Papier/Karton (23) mittels eines Riemens (39) übertragen wird, der mit Riemenscheiben (40a), (40b) gekoppelt ist, die in die Enden der zwei Rotoren (9), (10) der zweiten Vorrichtung für die Plastik- und Metallverpackung (8) eingebettet sind, und mit einer weiteren Riemenscheibe (41), die in einem Ende eines der zwei gegenüberliegenden Rotoren (24) der dritten Vorrichtung eingebettet ist, wobei diese zwei gegenüberliegenden Rotoren (24) mittels lateraler Getrieberäder (42) verbunden sind, die ineinander eingreifen.

15. Ausrüstung zur Trennung und Behandlung von Hausmüll nach Anspruch 14, **dadurch gekennzeichnet, dass** der Schlepprotor (9) der zweiten Vorrichtung ein eingebettetes vorderes Getrieberad (18) aufweist, während das Zahnrad (10) dieser zweiten Vorrichtung ein eingebettetes hinteres Getrieberad (19) aufweist, wobei diese zwei Getrieberäder an einer Kette (21) befestigt sind, die auch mit einem zentralen Getrieberad (20) gekoppelt ist, das in ein Ende einer Querachse (22) eingebettet ist, wobei die Bewegung zwischen beiden gegenüberliegenden Rotoren (24) mittels der Kette (21) übertragen wird.

16. Ausrüstung zur Trennung und Behandlung von Hausmüll nach Anspruch 14, **dadurch gekennzeichnet, dass** die Übertragung der Bewegung zwischen dem Schlepprotor (9) und dem Zahnrotor (10) ein in den Schlepprotor (9) eingebettetes vorderes Zahnrad (60) und ein in den Zahnrotor (10) eingebettetes hinteres Zahnrad (61) umfasst, die in diesem Fall der Kette (21) vorausgehen.

17. Ausrüstung zur Trennung und Behandlung von Hausmüll nach einem der vorhergehenden Ansprüche, **dadurch gekennzeichnet, dass**:
- sie eine Heißsiegelvorrichtung (49) zum Verschließen und Versiegeln der Öffnung eines Plastikbeutels (50), der in dem fünften Behälter (63) untergebracht ist, umfasst;
- die Heißsiegelvorrichtung (49) zwei sich in Gegenrichtung bewegende mobile Stützen (51) umfasst, die mit Gewindeabschnitten (einer mit Linksgewinde und der andere mit Rechtsgewinde) einer Rotationsschraube (52) gekoppelt sind, die sich mittels eines Motorelements (53) in beide Richtungen drehen; erwärmten Profilen (54) zugewandt sind, die in den mobilen Stützen (51) befestigt sind, mittels derer die Öffnung des Plastikbeutels (50) mit Wärme versiegelt wird.

18. Ausrüstung zur Trennung und Behandlung von Hausmüll nach einem der vorhergehenden Ansprüche, **dadurch gekennzeichnet, dass** sie Folgendes umfasst:
eine Selbstreinigungsvorrichtung, die eine Reihe von Leitungen (45) umfasst, die in Reinigungsdüsen (46) öffnen, die jedes der Module mittels Wasser reinigen, das mit einer in einem Fach (48) untergebrachten duftenden Seife (47) kombiniert wird; wobei die Aktivierung der Reinigungsvorrichtung die Wasserzirkulation zum Inkontaktkommen mit der duftenden Seife (47) bewirkt.

## Revendications

1. Équipement pour la séparation et le traitement de déchets ménagers comprenant un châssis périphérique dans lequel un premier module est fixé pour les déchets de verre, un deuxième module pour les déchets plastiques et métalliques, un troisième module pour les déchets papier/carton et un quatrième module pour les déchets organiques, dans lequel les différents modules comprennent respectivement des dispositifs pour réduire le volume des déchets, de sorte qu'une fois que le volume des déchets a été réduit, les déchets sont déposés par gravité dans des sacs dans des récipients indépendants agencés dans la partie inférieure du boîtier environnant, en dessous les dispositifs, dans lequel l'équipement comprend en outre :
- un premier dispositif pour broyer les récipients en verre (2), dans lequel le matériau en verre broyé tombe par gravité dans un premier récipient de collecte (7) ;
- un deuxième dispositif pour réduire le volume des emballages en plastique et en métal (8) sous lequel est agencé un deuxième récipient de collecte (14) pour les emballages en plastique et en métal (8) ;
- un troisième dispositif pour broyer le matériau papier/carton (23) comprenant deux rotors opposés (24), dans lequel le matériau broyé tombe en dessous des deux rotors opposés (24) jusqu'à atteindre un sac dans un troisième récipient de collecte (26) ;
- un quatrième dispositif de séchage pour extraire l'humidité de la matière organique (31) ;
- un cinquième dispositif pour broyer la matière organique (31) après son séchage qui comprend deux groupes de disques de broyage (55) ; un cinquième récipient de collecte (63) pour la matière organique étant agencé en dessous les disques de broyage (55) ;
- des tunnels d'admission à travers lesquels les déchets ménagers sont introduits, dans lequel lesdits tunnels d'admission constituent des conduits de déchets ménagers vers les différents dispositifs pour réduire le volume desdits déchets ;
dans lequel le mouvement des premier, deuxième, troisième et cinquième dispositifs est transmis au moyen d'un seul moteur électrique (36), dont la rotation transmet simultanément le mouvement auxdits dispositifs.

2. Équipement pour la séparation et le traitement de déchets ménagers selon la revendication 1, **caractérisé en ce que** le premier dispositif pour broyer l'emballage en verre (2) comprend un rotor de broyage (3) pourvu de bras radiaux (4) qui ont des dents d'extrémité (5) qui frappent les récipients en verre (2).

3. Équipement pour la séparation et le traitement de déchets ménagers selon l'une quelconque des revendications précédentes, **caractérisé en ce que** le deuxième dispositif pour réduire le volume de l'emballage en plastique et en métal (8) comprend un rotor en traînée (9) à rotor denté (10), les deux rotors étant agencés en parallèle et tournant dans le même sens ; le rotor denté (9) ayant des dents (11) se terminant par une arête vive, tandis que le rotor en traînée (9) a des ailettes radiales (12) qui entraînent les emballages en plastique et en métal (8) vers le rotor denté (10) dans une phase initiale.

4. Équipement pour la séparation et le traitement de déchets ménagers selon l'une quelconque des revendications précédentes, **caractérisé en ce que** le troisième dispositif pour broyer le matériau papier/carton (23) comprend deux rotors opposés (24) avec des axes parallèles qui tournent dans des sens opposés et qui sont agencés sur le même plan horizontal ; dans lequel le matériau papier/carton (23), après avoir été déposé sur les deux rotors opposés (24), est avalé par une succession de roues dentées (25) incorporées sur les rotors opposés (24).

5. Équipement pour la séparation et le traitement de déchets ménagers selon l'une quelconque des revendications précédentes, **caractérisé en ce que** les deux groupes de disques de broyage (55) sont fixés à deux arbres parallèles (56) ; dans lequel les deux groupes de disques de broyage (55) s'insèrent entre des paires de plaques fixes (57) agencées sur des plans parallèles et qui sont reliées à des paires de barres (58) avec leurs extrémités intégrées dans deux châssis fixes (59), auxquels deux arbres parallèles (56) qui tournent dans des sens opposés sont également couplés.

6. Équipement pour la séparation et le traitement de déchets ménagers selon l'une quelconque des revendications précédentes, **caractérisé en ce que** :
- le quatrième dispositif de séchage comprend un circuit d'air (33) entraîné par un ventilateur (34) et chauffé au moyen d'une résistance électrique (35) disposée dans ledit circuit d'air (33), à travers lequel de l'humidité est extraite de la matière organique (31) afin de l'expulser dans l'atmosphère au moyen d'un filtre (62) afin d'éliminer les odeurs désagréables ; dans lequel la matière organique (31) est logée dans une chambre (32) insérée dans le circuit d'air (33) ;
- le quatrième dispositif de séchage est fermé et a une bouche d'entrée (32a) à travers laquelle l'air chaud entre et une bouche de sortie (32b) à travers laquelle un mélange d'air et d'humidité qui atteint la résistance électrique (35) sort ; dans lequel (32) la chambre est située entre la bouche d'entrée (32a) et la bouche de sortie (32b), dans laquelle la matière organique (31) est logée lorsqu'elle est séchée.

7. Équipement pour la séparation et le traitement de déchets ménagers selon l'une quelconque des revendications précédentes, **caractérisé en ce que** le premier module pour les déchets de verre comprend un premier tunnel d'admission (6) qui présente une section descendante initiale vers l'intérieur du tunnel, une deuxième section intermédiaire élargie et une section finale qui s'ouvre sur un premier récipient (7) ; dans lequel le premier dispositif de broyage est à l'intérieur de la section intermédiaire élargie.

8. Équipement pour la séparation et le traitement de déchets ménagers selon l'une quelconque des revendications précédentes, **caractérisé en ce que** le deuxième dispositif pour l'emballage en plastique et en métal (8) est agencé sur une section intermédiaire d'un deuxième tunnel d'admission (13) qui a également une section initiale avec une bouche à travers laquelle l'emballage (8) est introduit et une section finale qui s'ouvre sur le deuxième récipient (14) ; dans lequel la section initiale du deuxième tunnel (13) est agencée horizontalement, tandis que la section finale est agencée verticalement, le deuxième dispositif étant agencé à la jonction des sections initiale et finale du tunnel.

9. Équipement pour la séparation et le traitement de déchets ménagers selon la revendication 3, **caractérisé en ce qu'**en dessous du rotor en traînée (9) du deuxième dispositif il y a une plateforme de pont (16) pour supporter l'emballage en plastique et en métal (8), dans lequel une extrémité de ladite plateforme de pont (16) est proche des dents (11) du rotor denté (10), définissant un passage étroit (17) entre ladite extrémité de la plateforme de pont (16) et les dents (11) du rotor denté (12) à travers lequel les emballages (8) passent lorsqu'ils sont entraînés par les mouvements de rotation combinés du rotor denté (10) et du rotor en traînée (9).

10. Équipement de séparation et de traitement des déchets ménagers selon la revendication 9, **caractérisé en ce que** le deuxième dispositif est complété par la plateforme de pont (16) et une bande transporteuse (15) qui entraîne les emballages en plastique et en métal (8) vers ledit deuxième dispositif ; dans lequel la plateforme de pont (16) est agencée entre la bande transporteuse (15) et le rotor denté (10).

11. Équipement pour la séparation et le traitement de déchets ménagers selon l'une quelconque des revendications précédentes 9 ou 10, **caractérisé en ce que** le rotor denté (10) et le rotor en traînée (9) du deuxième dispositif sont situés au-dessus de la plateforme de pont (16) ; dans lequel le rotor en traînée (9) est plus élevé que le rotor denté (10) par rapport à la plateforme de pont (16).

12. Équipement pour la séparation et le traitement de déchets ménagers selon la revendication 4, **caractérisé en ce que** :
- dans le troisième dispositif pour matériau papier/carton (23), les roues dentées (25) de l'un des rotors opposés (24) sont décalées par rapport aux roues dentées (25) de l'autre rotor opposé correspondant (24) ;
- entre les roues dentées adjacentes (25) d'un rotor opposé (24), il y a des espaces intermédiaires (27) en regard des roues dentées (25) de l'autre rotor correspondant (24) et inversement, dans lequel les roues dentées (25) d'un rotor opposé (24) s'insèrent dans les espaces intermédiaires (27) de l'autre rotor opposé correspondant (24).

13. Équipement pour la séparation et le traitement de déchets ménagers selon la revendication 12, **caractérisé en ce qu'**il comprend deux peignes (28) comprenant chacun un châssis (28a) et des dents (28b) qui ont des sections d'extrémité insérées dans les espaces intermédiaires (27) délimités entre les roues dentées adjacentes (25) de chacun des rotors opposés (24) du troisième dispositif, dans lequel ces sections d'extrémité ont des arêtes vives (29) qui sont en contact avec le côté éloigné des espaces intermédiaires (27) des rotors opposés (25) ; ces sections d'extrémité étant également en contact avec les faces latérales des roues dentées (25).

14. Équipement pour la séparation et le traitement de déchets ménagers selon les revendications précédentes 2, 3 et 4, **caractérisé en ce que** :
- le moteur électrique (36) transmet son mouvement à un arbre initial (37) dont l'une des extrémités transmet son mouvement de rotation directement au rotor de broyage (3) du premier dispositif pour le verre, tandis que l'extrémité opposée de l'arbre initial (37) transmet son mouvement de rotation au deuxième dispositif pour l'emballage en plastique et en métal (8) au moyen d'un mécanisme de transmission à roue dentée et à pignons (38) ;
- le mouvement du troisième dispositif de broyage de papier/carton (23) est transmis au moyen d'une bande (39) couplée à des poulies (40a), (40b) intégrées dans les extrémités des deux rotors (9), (10) du deuxième dispositif pour l'emballage en plastique et en métal (8), et une autre poulie (41) intégrée dans une extrémité de l'un des deux rotors opposés (24) du troisième dispositif, dans lequel ces deux rotors opposés (24) sont reliés au moyen de roues d'engrenage latérales (42) qui s'engagent les unes dans les autres.

15. Équipement pour la séparation et le traitement de déchets ménagers, selon la revendication 14, **caractérisé en ce que** le rotor en traînée (9) du deuxième dispositif a une roue d'engrenage avant intégrée (18), tandis que la roue dentée (10) de ce deuxième dispositif a une roue d'engrenage arrière intégrée (19), ces deux roues d'engrenage étant reliées à une chaîne (21) qui est également couplée à une roue d'engrenage centrale (20) intégrée dans une extrémité d'un axe transversal (22), dans lequel le mouvement entre les deux rotors opposés (24) est transmis au moyen de ladite chaîne (21).

16. Équipement pour la séparation et le traitement de déchets ménagers selon la revendication 14, **caractérisé en ce que** la transmission de mouvement entre le rotor en traînée (9) et le rotor denté (10) comprend une roue dentée avant (60) intégrée dans le rotor en traînée (9) et une roue dentée arrière (61) intégrée dans le rotor denté (10), précédant ici la chaîne (21).

17. Équipement pour la séparation et le traitement de déchets ménagers selon l'une quelconque des revendications précédentes, **caractérisé en ce que** :
- il comprend un dispositif de thermoscellage (49) pour fermer et sceller la bouche d'un sac en plastique (50) logé dans le cinquième récipient (63) ;
- le dispositif de thermoscellage (49) comprend deux supports mobiles (51) qui se déplacent dans des sens opposés, qui sont couplés à des sections filetées (l'un avec des filetages à gauche et l'autre avec des filetages à droite) d'une vis rotative (52) qui tournent dans les deux sens au moyen d'un élément moteur (53) ; des profilés chauffés en regard (54) étant fixés aux supports mobiles (51) au moyen desquels la bouche du sac en plastique (50) est scellée avec la chaleur.

18. Équipement pour la séparation et le traitement de déchets ménagers selon l'une quelconque des revendications précédentes, **caractérisé en ce qu'**il comprend
un dispositif autonettoyant comprenant un ensemble de conduits (45) qui s'ouvrent sur des buses de nettoyage (46) qui nettoient chacun des modules au moyen d'eau mélangée à un pain de savon parfumé (47) logé dans un compartiment (48) ; dans lequel l'activation du dispositif de nettoyage fait en sorte que la circulation de l'eau entre en contact avec le pain de savon parfumé (47).
